# EUROPEAN PATENT APPLICATION

(11) **EP 4 838 527 A1**
(43) Date of publication of application: **11.11.2026**
(21) Application number: 26177478.0
(22) Date of filing: 08.05.2026
(51) Int. Cl.: G10L 25/63, G10L 25/30, B60R 16/037, G06N 3/045, G06V 40/16

(54) **CONVOLUTIONAL ATTENTION-BASED TRANSFORMER FOR EMOTION RECOGNITION**

(30) Priority: 10.05.2025 US 202519204528
(71) Applicant: Faurecia IRYStec, Inc., Montreal Québec H2Y 3P4 (CA)
(72) Inventor: YOO, Hyunjin, Nepean (CA); LORCHAT, Jean, MONTREAL (CA); CHUNG, Hanwook, MONTREAL (CA)
(74) Representative: Lavoix

(57) **Abstract**

A machine learning (ML) system including an emotion recognition (ER) system, method, training method and system therefor. The ER system includes at least one processor and memory having computer instructions that, when executed by the at least one processor, cause the system to operate an ER network that comprises an encoder and a decoder. The encoder is configured to generate an embedded feature includes self-attention followed by a convolutional layer. The decoder is configured to generate a predicted emotion output based on the embedded feature, the decoder is configured to perform cross-attention in which the embedded feature generated by the encoder is used as input along with an emotion query embedding generated based on an emotion query.

## Description

### TECHNICAL FIELD

The present invention relates to machine learning including emotion recognition (ER), Transformer models, attention mechanisms for use in Transformer and other machine learning models, and trainable attention queries.

### BACKGROUND

The general objective of emotion recognition (ER) algorithms is to automatically determine the emotional state of an individual, such as from a speech signal from a speaker or video / images captured by a digital camera. ER, including speech emotion recognition (SER), has become an important aspect for human-computer interaction (HCI) and finds various applications, including driver and passenger monitoring in automotive, customer support call center, mental depression diagnosis, civil aviation monitoring, to name a few. A typical SER system consists of acoustic feature extractor and emotion classifier. Numerous traditional machine learning approaches have been adopted for the emotion classifier, such as Gaussian mixture model (GMM), hidden Markov model (HMM) and support vector machine (SVM).

In recent years, deep learning (DL)-based techniques have attracted enormous interest and found diverse applications, including speech and image processing. One of the main advantages of the DL-based methods that has led to its great success is the strong nonlinear modeling capabilities that can effectively extract complex features from the given data. Various DL-based algorithms for SER have been introduced, such as combination of phoneme sequence and spectrogram-based convolutional neural networks (CNNs) and one that uses multiple parallel CNN blocks with different filter sizes to better extract the spectro-temporal information.

Besides the afore-mentioned approaches, an attention mechanism, first introduced for machine translation, has been widely adopted in various DL-based applications. It is well known to effectively focus on relevant information while disregarding the irrelevant ones. Regarding the SER task, a recurrent neural network (RNN) with a weighted pooling over time based on local attention has been used.

However, most attention-based networks first process the given feature through multiple hidden layers (e.g., via CNN and/or RNN), followed by the multi-layer perceptron (MLP)-based attention layer, which may limit the full capabilities of attention mechanism. Moreover, most approaches are implemented based on the attention score computed across time frames, which may limit real-time processing for emotion recognition.

### SUMMARY

According to a first aspect of the invention, there is provided an emotion recognition (ER) system, wherein the ER system includes at least one processor and memory having computer instructions that, when executed by the at least one processor, cause the system to operate an ER network, wherein the ER network comprises: an encoder and a decoder. The encoder configured to generate an embedded feature includes self-attention followed by a convolutional layer. The decoder is configured to generate a predicted emotion output based on the embedded feature, and is configured to perform cross-attention in which the embedded feature generated by the encoder is used as input along with an emotion query embedding generated based on an emotion query.

According to various embodiments, the method may further include any one of the following features or any technically-feasible combination of some or all of the features:
- the self-attention of the encoder employs a convolutional layer that operates on positionally-encoded input of the self-attention of the encoder;
- the emotion query is an emotion query, and wherein the emotion query embedding is generated through self-attention performed using the emotion query and the embedded feature generated by the encoder;
- the decoder includes a convolutional feed-forward network that operates on the output of the cross-attention;
- the ER system is a speech ER system that is configured to generate a predicted emotion given input speech;
- the ER system is a video ER system that is configured to generate a predicted emotion for input image data;
- the ER system is an audiovisual speech ER system that is configured to generate a predicted emotion based on input audio data and input image data;
- the encoder includes a plurality of encoder blocks, and wherein each encoder block of the plurality of encoder blocks includes convolutional self-attention as the self-attention for the encoder; and/or
- each encoder block includes performing convolutional self-attention as the self-attention for the encoder.

According to a second aspect of the invention, there is provided machine learning (ML) system, wherein the ML system includes at least one processor and memory having computer instructions that, when executed by the at least one processor, cause the system to operate a ML network, wherein the ML network comprises: an encoder and a decoder. The encoder has at least one convolutional self-attention encoder block comprised of convolutional self-attention followed by a convolutional feed-forward network. The decoder has at least one convolutional cross-attention decoder block comprised of convolution cross-attention followed by a convolutional feed-forward network.

According to various embodiments, the method may further include any one of the following features or any technically-feasible combination of some or all of the features:
- the convolutional self-attention includes performing a convolution separately over an initial query, key, and value;
- the convolutional cross-attention includes performing a convolution separately over an initial query, key, and value;
- the convolutional cross-attention includes using a learnable decoder query embedding as query in the convolutional cross-attention;
- the ML network is trained using a training process that includes reconstructing an encoder input feature using a feature decoder that is arranged in an autoencoder fashion with the encoder;
- the encoder and the feature decoder are configured in a U-net configuration during the training process;
- the feature decoder includes convolution cross-attention followed by a convolutional feed-forward network; and/or
- the convolution cross-attention of the feature decoder generates an output based on an output of the encoder.

According to another aspect, there is provided an ER network comprised of the ML network of the previous aspect, wherein the ER network is configured to determine a predicted emotion output based on audio and/or image data.

According to another aspect, there is provided an onboard vehicle controller for a vehicle, comprising the ER system of the first and/or second aspects, wherein the ER system is configured to receive sensor data of the vehicle and to process the sensor data using the ER network in order to determine a predicted emotion based on the predicted emotion output of the ER network. According to aspects, the sensor data is audio data having speech of a human passenger of the vehicle, and/or channel-wise attention is performed by the ER network.

According to another aspect, there is provided a vehicle, such as an automobile or passenger vehicle, that includes the onboard vehicle controller of the previously-described aspect.

### BRIEF DESCRIPTION OF THE DRAWINGS

Preferred exemplary embodiments will hereinafter be described in conjunction with the appended drawings, wherein like designations denote like elements, and wherein:
FIG. 1 is a block diagram illustrating a training architecture for training an emotion recognition (ER) network of an ER system, according to one embodiment;
FIG. 2 is a block diagram illustrating a convolutional layer block (CB) used in encoder and/or decoder blocks of the ER network of FIG. 1, according to one embodiment;
FIG. 3 is a block diagram illustrating a convolutional Transformer (CTR) used in encoder and/or decoder blocks of the ER network of FIG. 1, according to one embodiment;
FIG. 4 is a block diagram illustrating a convolutional self-attention layer used in encoder and/or decoder blocks of the ER network of FIG. 1, according to one embodiment;
FIG. 5 is a block diagram illustrating a fully convolutional transformer architecture that may be used for the ER network of FIG. 1, according to one embodiment;
FIG. 6 is a block diagram illustrating a convolutional cross-attention layer used in the decoder of the ER network of FIG. 1, according to one embodiment;
FIG. 7 is a block diagram illustrating a conditional CTR-based training network, according to a more particular embodiment of FIG. 1;
FIG. 8 is a block diagram illustrating an emotion query generating module (EQGM) used for generating an emotion query feature used for the decoder, according to one embodiment; and
FIG. 9 is a block diagram illustrating a refined emotion embedding module that may be used for refining a predicted emotion, such as for use in a feature decoder arranged in an autoencoder or U-net arrangement, according to one embodiment.

### DETAILED DESCRIPTION

The system and method described herein enables enhanced and/or improved emotion recognition (ER), particularly through a convolutional Transformer-based encoder-decoder network. This Transformer-based encoder-decoder network employs a Transformer-like architecture including an encoder with self-attention and a decoder with masked multi-headed self-attention as well as cross-attention. This network is employed for purposes of predicting an emotion state given input audio, and is referred to as a ER machine learning (ML) network or a "ER ML network". Although the illustrated and described embodiments and aspects below relate to use of such an ML network in the context of predicting an emotion state for given input audio, those skilled in the art will appreciate that the present technology may be extended to other use cases, such as, for example, for use in object detection using video as its input in place of the audio. Accordingly, the present technology, while characterized at times in the context of audio-based emotion state prediction, is not limited to such a context, unless otherwise expressly provided for.

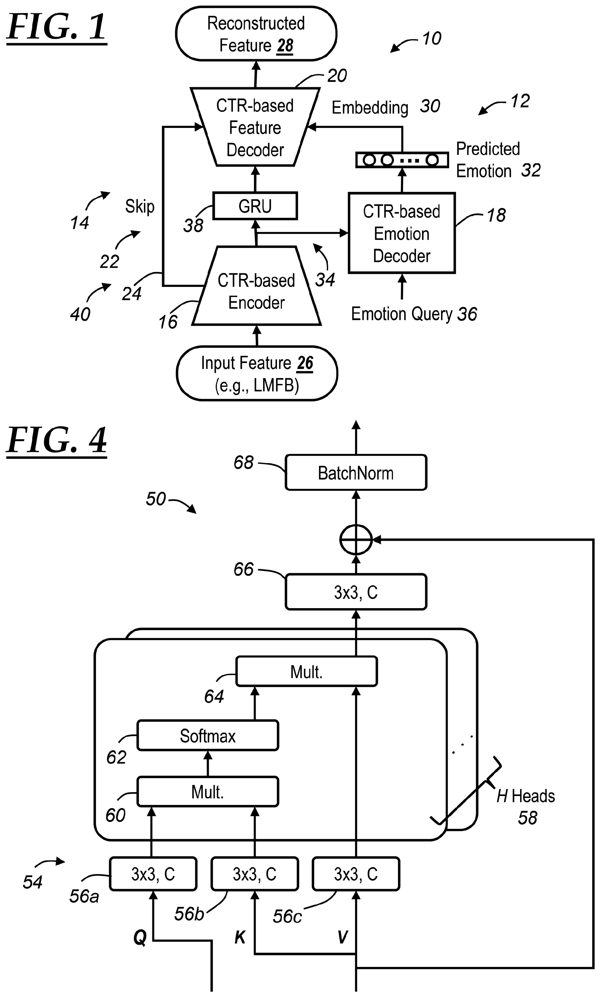

With reference to FIG. 1, there is shown a conditional CTR-based training architecture 10 for training an emotion recognition ER ML network, particularly, a SER ML network 12, according to the present embodiment. The conditional CTR-based training architecture 10 includes a conditional CTR-based U-net network 14 used for reconstructing features, facilitating learning for the SER ML network 12, as discussed in more detail below.

The SER ML network 12 is comprised of a CTR-based encoder 16 and a CTR-based emotion decoder 18. The conditional CTR-based U-net network 14 is comprised of the CTR-based encoder 16 and a CTR-based feature decoder 20.

The CTR-based U-net network 14 is designed and configured to extract compressed bottleneck features for recognition through use of a U-net autoencoder architecture or framework 22 in which of one or more *(e.g.,* a plurality of, as in the present embodiment) skip connections 24 connect hidden layer(s) of the CTR-based encoder 16 and hidden layer(s) of the CTR-based feature decoder 20.

The CTR-based U-net feature decoder 20 is configured to reconstruct the given input 26 feature from the bottleneck feature so that a reconstructed feature 28 is usable for training. According to embodiments, the main objective of the CTR-based U-net feature decoder 20 is to better extract the features for CTR-based emotion decoder 18. To this end, the proposed CTR-based U-net feature decoder 20 operates based on a refined embedding 30 of the predicted emotion states 32 as well as the features 34 from the encoder 16. As shown in FIG. 1 of the present embodiment, the predicted emotion states 32 are generated by the CTR-based emotion decoder 18 based on the features 34 and an emotion query 36. An output of a gated recurrent unit (GRU) 38, which is generated based on the features 34 as well as its hidden state from past iterations of the network, is used as input for the CTR-based feature decoder 20 along with the refined embedding 30. Accordingly, at least according to the present embodiment, the training architecture 10 is configured to train this conditional CTR-based architecture 10 by minimizing both the reconstruction loss as well as the classification loss.

In addition, in the proposed framework of the present embodiment, channel attention is considered for each time frame in the CTRs in order to better enable real-time processing of emotion recognition. Experimental results showed that the proposed emotion classification with the conditional CTR-based U-net architecture provided better recognition performance than the selected benchmark algorithms.

In the present embodiment, log-Mel filterbank (LMFB) coefficients are used to capture audio feature information from an audio signal, and then these LMFB coefficients are used as the input feature 26, $x ∈ {ℝ}^{T \times F}$, where T is the number of time frames and F is the feature size. For a given LMFB, the CTR-based encoder 16 extracts the compressed bottleneck feature. The CTR-based emotion decoder 18 predicts the emotion 32 based on the bottleneck feature 34 and the emotion query 36. The CTR-based U-net feature decoder 20 reconstructs the given LMFB feature 26 based on the bottleneck feature 34, the predicted emotion embedding 30, and the features from the encoder 16 provided via the skip connections 24.

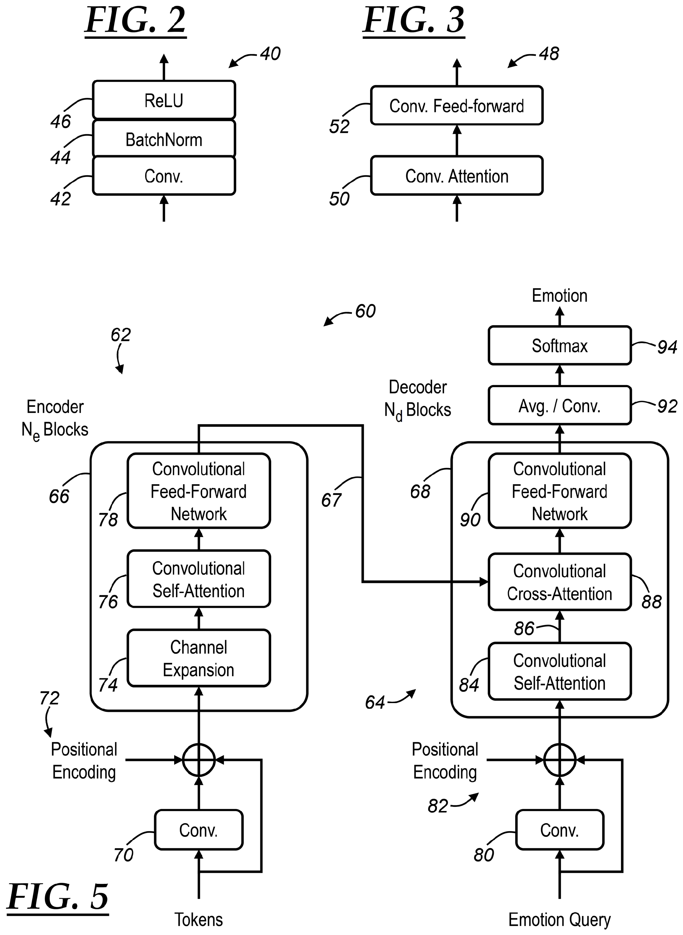

The CTR-based encoder 16 is composed of multiple CTR blocks, with each block first performing a channel expansion via a convolutional layer block (CB) 40 as illustrated in FIG. 2. The CB 40 includes a convolutional layer 42, batch normalization ("BN" or "BatchNorm") 44, and a rectified linear unit (ReLU) activation function 46.

The average pooling is performed over the time frame and feature dimension, particularly, 2-D average pooling with kernel size of (3,3) with stride of (2,2), at least in the present embodiment. The feature is then fed to a CTR 48, as shown in FIG. 3, which includes a convolutional self-attention layer 50 and convolutional feed-forward layer 52.

With reference now to FIG. 4, there is shown the convolutional self-attention layer 50, which includes an embedding layer 54 in which a 2-D convolution 56a-c with kernel size *kxk* and output channel C is applied, specifically to each of the query (*Qᵢ*), key (*Kᵢ*), and value (*Vᵢ*). Multi-headed attention, which enables better handling of various input sequences, is then implemented by dividing them into multiple channels with a total of H heads 58. The output of a single attention head is computed generally through using a first multiplier 60 to generate a product from the output of the query convolution layer 56a and the key convolution layer 56b, which then undergoes a softmax operation 62 to generate probability distribution data. This probability distribution data is a probability distribution representation of the product of multiplication operation 60. The probability distribution data is then used along with output of the value convolution layer 56c to generate an attention head output. A product is generated by multiplication operation 64 in which the probability distribution data is multiplied with the output of the value convolution layer 56c.

The attention for a given head *h* of the *H* attention heads 56 is defined as follows: $Attention \left({{Q}^{˜}}_{ih}, {{K}^{˜}}_{ih}, {{V}^{˜}}_{ih}\right) = softmax \left(\frac{{{Q}^{˜}}_{ih} {{K}^{˜}}_{ih}^{T}}{\sqrt{{F}_{i}}}\right) {{V}^{˜}}_{ih}$ Equation (1) where ${{Q}^{˜}}_{ih} ∈ {ℝ}^{{T}_{i} \times {C}_{ih} \times {F}_{i}} , {{K}^{˜}}_{ih} ∈ {ℝ}^{{T}_{i} \times {C}_{ih} \times {F}_{i}}$, and ${{V}^{˜}}_{ih} ∈ {ℝ}^{{T}_{i} \times {C}_{ih} \times {F}_{i}}$ respectively denote the query, key, and value of the h-the attention head after the convolution operation 56a-c, and *Cᵢₕ, Tᵢ,* and *Fᵢ* respectively denote the number of channels, time frames, and feature size, with the superscript T denoting matrix transformation of the channel and spectral feature domain. Note that the channel attention better enables real-time processing, *i.e.,* the attention score having the formula of ${{Q}^{˜}}_{ih} {{K}^{˜}}_{ih}^{T} ∈ {ℝ}^{{T}_{i} \times {C}_{ih} \times {C}_{ih}}$*.*

The H attention head outputs then undergo a convolution projection 66 in which the particularly a 3 × 3 convolution in the illustrated embodiment. Of course, in other embodiments, the dimensions or shape used for this convolution and/or various others may be adapted according to the architecture and/or other like attributes of the particular model being trained. The output of the convolution projection 66 is then

With reference now to FIG. 5, there is shown an embodiment of a fully convolutional transformer architecture 60, particularly one that is configured as an ER ML network such as the ML network 12. The fully convolutional transformer architecture 60 includes a CTR-based encoder 62, corresponding to the CTR-based encoder 16, and also includes a CTR-based emotion decoder 64, corresponding to the CTR-based motion decoder 18. The CTR-based encoder 62 is comprised of *Nₑ* encoder blocks 66 and the CTR-based emotion decoder 64 is comprised of *N_{d}* decoder blocks 68. A single one of the CTR-based encoder blocks 66 is shown in FIG. 5, however, the discussion and components discussed with respect to the illustrated CTR-based encoder block 66 applies equally to each of the other encoder blocks, unless stated or expressly provided for otherwise. Likewise, a single one of the CTR-based emotion decoder blocks 68 is shown in FIG. 5, however, the discussion and components discussed with respect to the illustrated CTR-based emotion decoder block 68 applies equally to each of the other emotion decoder blocks, unless stated or expressly provided for otherwise.

Prior to processing by the CTR-based encoder blocks 66 of the CTR-based encoder 62, the input is tokenized, convolved through a convolution 70, and then positionally encoded, as illustrated at 72. Proceeding upward, this positionally-encoded input feature is now passed into the first CTR-based encoder block 66 whereby it first goes through channel expansion 74, followed by convolutional self-attention 76, and a convolutional feed-forward network 78.

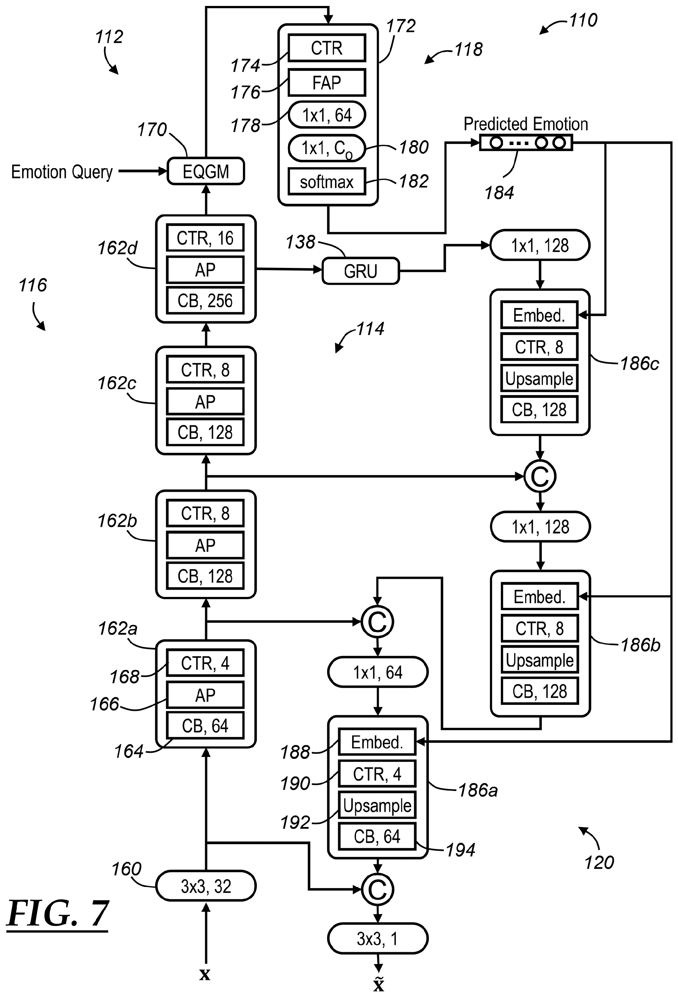

The channel expansion 74 for the encoder blocks 66 is implemented in the present embodiment through use of the CB 40, as shown and described above with respect to FIG. 2. After channel expansion, such as from 32 to 64 channels for the first CTR-based encoder block 66, average pooling may be performed by the average pooling layer (e.g., average pooling layer 166 (FIG. 7), as discussed below). This is followed by the convolutional self-attention 76 and the convolutional feed-forward network 78, which is performed by the CTR 48, at least in the present embodiment. More particularly, the convolutional attention 50 of the exemplary CTR 48 corresponds here in the CTR-based encoder blocks 66 to the convolutional self-attention 76; likewise, the convolutional feed forward layer 52 corresponds here to the convolutional feed-forward network 78. An encoder output 67 of the first CTR-based encoder block 66 is provided to the next CTR-based encoder block 66 of the CTR-based encoder 62 as well as to be combined with input into a CTR-based feature decoder block (not shown in FIG. 5), as discussed more below.

The CTR-based emotion decoder 64 is analogous to the CTR-based emotion decoder 18 of FIG. 1 and that discussion is hereby incorporated and attributed to the CTR-based emotion decoder 64 in its entirety. The CTR-based emotion decoder blocks 68 each operates over a learnable emotion query input as well as an output of the CTR-based encoder 62, particularly, that output of the last or final encoder block in the encoder 62.

After performing a convolution 80 through use of a learned linear layer followed by positional encoding 82, the emotion query (corresponding to the emotion query 36 of FIG. 1) is input into the CTR-based emotion decoder block 68 whereby it first undergoes convolutional self-attention 84, such as, for example, set forth in the CTR 48 at convolutional attention 50.

This self-attentive convolved emotion embedding 86 is then used along with the encoder output 67 for convolutional cross-attention 88. Particularly, at least in the present embodiment, the convolutional cross-attention 88 employs the encoder output 67 for the key and value with the self-attentive convolved emotion embedding 86 being used for the query in this cross-attention scheme. After cross-attention is performed, an average pooling and convolution layers 92 is used, followed by softmax operation 94.

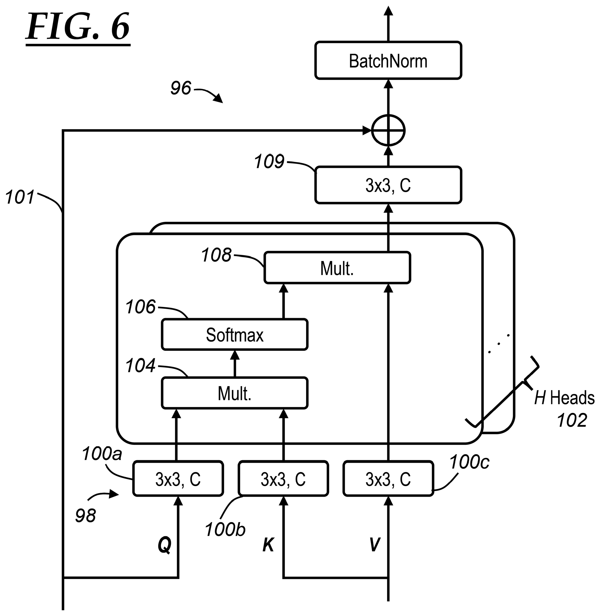

With reference to FIG. 6, there is shown a convolutional cross-attention layer 96, which includes an embedding layer 98 in which a 2-D convolution 100a-c with kernel size *kxk* and output channel C is applied, specifically to each of the query (*Qᵢ*), key (*Kᵢ*), and value (*Vᵢ*). The key $K ∈ {ℝ}^{{T}_{E} \times {C}_{E} \times {F}_{E}}$*,* and value $V ∈ {ℝ}^{{T}_{E} \times {C}_{E} \times {F}_{E}}$ here are obtained from the encoder 62 and used as input into the convolution 100b,c, where *C_{E}* denotes the number of channels and *T_{E}* denotes the number of time frames of the encoder output feature, while using the self-attentive convolved emotion embedding 86 for the query $Q ∈ {ℝ}^{{T}_{E} \times {C}_{Q} \times {F}_{E}}$*.*

In one embodiment, the emotion query, represented as $Q ∈ {ℝ}^{{C}_{Q} \times 1 \times {F}_{E}}$ where *C_{Q}* is the query size and *F_{E}* is the feature size of the output encoder, such as, for example, *C_{Q}* = 64. Multi-headed attention, which enables better handling of various input sequences, is then implemented by dividing them into multiple channels with a total of H heads 102. The output of the cross-attention is then passed to the convolutional feed-forward block 109. According to one embodiment, as in the encoder, *(k, s, p)* = (3,1,1) is used for all convolutional and average pooling layers, except the convolutional projection layer where *(k, s, p*) = (1,1,0) is used. Finally, the output of the decoder is passed to the frame-wise average pooling and convolutional layers 92. The emotion state is then predicted by applying the softmax activation function 94, resulting in $O ∈ {ℝ}^{{C}_{O} \times {T}_{O} \times 1}$*,* where *Cₒ* is the number of emotion states and *T_{O}* is the number of final time frames.

With reference now to FIG. 7, there is shown an embodiment of conditional CTR-based training network 110 that is configured according to the framework 10 introduced in FIG. 1. The training network 110 includes a SER ML network 112 and a conditional CTR-based U-net network 114. The SER ML network 112 includes a CTR-based encoder 116 and a CTR-based emotion decoder 118, and the conditional CTR-based U-net network 114 includes the CTR-based encoder 116 and a CTR-based feature decoder 120. FIG. 7 presents one exemplary embodiment of the general framework 10 set forth above in connection with FIG. 1, as will be appreciated by those skilled in the art. FIG. 7 includes numerous analogous or like components, and these components share the same names and last two digits of the reference numerals (e.g., SER ML network 12 and SER ML network 112). In FIG. 7, the numbers in the parenthesis of CTR blocks indicate the numbers of output channel of CB and heads of CTR.

The input x corresponds to the input feature 26 (FIG. 1), and may be a tokenized or encoded input, such as , for example, a set of LMFB coefficients $x ∈ {ℝ}^{T \times F}$, as discussed above. The input x first is encoded using a 3×3 convolution 160 along each of 32 channels (C = 32).

The CTR-based encoder 116 is comprised of four CTR-based encoder blocks 162a-d that are connected in serial fashion whereby processing of the input x proceeds through the CTR-based encoder 116 from left to right, when viewing FIG. 7 with the text right-side-up, and generates an output that is then input into the CTR-based emotion decoder as well as into a GRU 138. The CTR-based encoder 116 corresponds to the CTR-based encoder 16, 62.

Each of the encoder blocks 162a-d includes a CB as well as a CTR. For example, the first encoder block 162a, as illustrated in FIG. 7, depicts its operations, which start with a CB 164, average pooling 166, and CTR 168. Each of the other encoder blocks 162b-d may include the same or similar components, although parameters may change, particularly, the number of channels for the CB as well as the number of heads for the CTR. For example, the CB 164 of the first encoder block 162a performs a 3×3 convolution with 64 output channels, whereas the CB of the second and third encoder blocks 162b,c each performs a 3×3 convolution with 128 output channels, and the fourth encoder block 162d performs a 3×3 convolution with 256 output channels. For each of the encoder blocks 162a, the CB operation, which is shown again, for example, in FIG. 2 and discussed above with respect to the exemplary CB 40, is followed by the average pooling layer 166, and then a CTR block that uses four attention heads (H = 4). In the present embodiment, the second and third encoder blocks 162b,c each uses eight attention heads *(H* = 8), and the fourth encoder block 162d uses sixteen attention heads *(H* = 16). The output of the fourth encoder block 162d is passed as input into the CTR-based emotion decoder 118 as well as the GRU 138.

The CTR-based emotion decoder 118 includes an emotion query generating module (EQGM) 170 followed by a CTR emotion decoder block 172. The EQGM 170 is used for generating the emotion query that is to be input into the CTR emotion decoder block 172, and this query is generated based on the output of the CTR-based encoder 116.

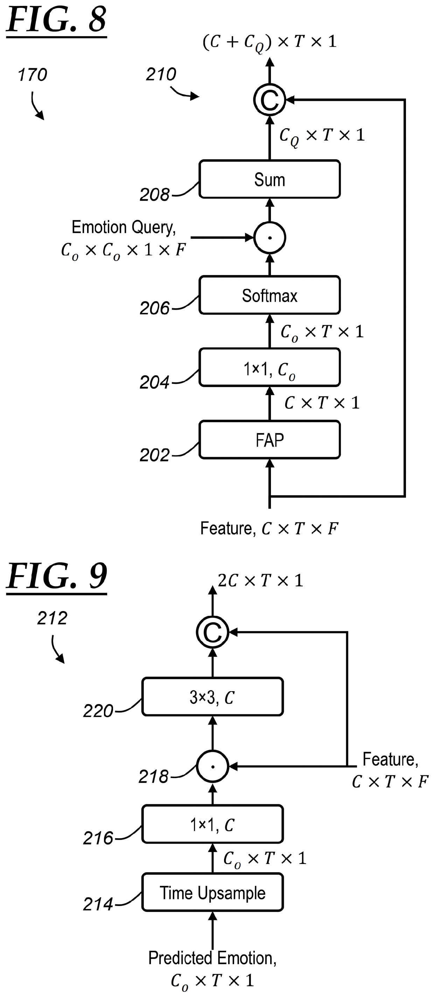

With reference now to FIG. 8, the EQGM 170 is shown in which it processes a bottleneck feature using a frame-wise average pooling layer 202, followed by a 1x1 convolution layer 204 with *Cₒ* channels, followed by a softmax operation 206. The softmax output is then element-wise multiplied (Hadamard product) with the emotion query, and after a sum 208, then channel-wise concatenated with the input bottleneck feature at 210.

With reference back to FIG. 7, the CTR 174 of the CTR emotion decoder block 172 is then passed to a frame-wise average pooling layer 176, followed by a 1x1, 64 channel convolutional layer 178, a second convolutional layer 180 (1x1, with *Cₒ* channels), and finally a softmax operation 182. The predicted emotion 184 is then generated and input into each of the decoder blocks 186a-c of the CTR-based feature decoder 120.

Each of the decoder blocks 186a-c includes a CB as well as a CTR. For example, the decoder block 162a, as illustrated in FIG. 7, depicts its operations, which starts with generating a refined embedding of the predicted emotion at 188, followed by CTR 190, then upsampling layer 192, and then CB 194. Each of the other decoder blocks 186b-c may include the same or similar components, although parameters may change, particularly, the number of channels for the CB as well as the number of heads for the CTR. For example, the CB 192 of the decoder block 186a performs a 3×3 convolution with 64 output channels, whereas the CB of the other decoder blocks 186b,c each performs a 3×3 convolution with 128 output channels. The CTR 188 of the decoder block 186a uses four attention heads (H = 4), and the CTR of the other two decoders each use eight attention heads (H = 8).

The feature decoder 120 reconstructs the given speech feature from the extracted bottleneck feature obtained via the encoder. The feature decoder 120 is used to better extract the feature for the emotion decoder 118 due to the additional reconstruction process. The feature decoder 120 is only employed during training and not used during the actual emotion recognition during the test stage.

The GRU 138 (corresponding to the GRU 38 of FIG. 1) is applied to the bottleneck feature output by the last encoder block 162d, and this helps to better capture temporal dependencies over time frames of the given speech feature (e.g., LMFG spectrogram in the SER embodiment discussed above), where 1 hidden layer is used. The output of the GRU layer 138 is then fed into the CTR decoder blocks 186a-c (starting with 186c). The U-net structure is used for handling the vanishing gradient issue while implementing error back-propagation for model training. That is, the output feature of each CTR block 168a-c in the encoder is concatenated with the output of the CTR decoder block of the corresponding feature decoder, as represented by the C in the circle in FIG. 7. This is then followed by the convolutional operation with the kerel size of 1×1 to efficiently reduce the channel size.

Second, a refined embedding method of the predicted emotion is introduced into the CTR blocks 186a-c of the feature decoder 120. For example, with reference now to FIG. 9, there is shown an exemplary refined emotion embedding module 212. The predicted emotion is stretched across time frames based on upsampling 214 to obtain identical number of time frames of the given feature, *i.e.,* output feature of the previous block. Subsequently, the time-stretched emotion is expanded using a 1x1 convolution layer 216, with element-wise multiplication 218 applied to the given feature, followed by a 3x3 convolution layer 220. The embedded feature is then channel-wise concatenated with the given feature. The remaining steps are similar to the CTR blocks of the encoder. That is, the embedded feature is then fed to the CTR 190, followed by the upsampling 192 and the CB 194. The reconstructed feature is denoted by ${x}^{˜} ∈ {ℝ}^{T \times F}$.

In regards to training, the overall architecture of the proposed conditional CTR-based U-net is jointly trained by minimizing the following loss function: $E = {E}_{C} + {λE}_{R}$ Equation (2) where *E_{C}* is the cross entropy error function, *E_{R}* is the reconstruction loss, and *λ* is regularization coefficient.

In order to handle the various length of the given utterances while training, the reconstruction and cross entropy losses as follows: ${E}_{C} = - \frac{{\sum }_{c} {\sum }_{t} {y}_{ct} log \left({m}_{t}{o}_{ct}\right)}{{\sum }_{t} {m}_{t}}$ Equation (3) ${E}_{R} = \frac{1}{F {\sum }_{t} {m}_{t}} {\sum }_{t} {\sum }_{f} {\left[{m}_{t}\left({x}_{tf}-{{x}^{˜}}_{tf}\right)\right]}^{2}$ Equation (4) where *y_{ct}* ∈ {0,1} is the target label of the emotion state for the class index c ∈ {0, ... , *C*₀ - 1}, and *mₜ* ∈ {0,1} is the mask which corresponds to 1 for the speech presence period, while 0 is used for the speech absence period in the present embodiment. The mask values can be simply obtained by observing the frame-wise average value of the given acoustic feature. In this work, we use the following criterion: ${m}_{t} = \left\{\begin{matrix}1 , & if \frac{1}{F} {\sum }_{f} {e}^{{x}_{tf}} > ϵ , \\ 0 , & otherwise\end{matrix}\right.$ Equation (5) where *∈* = 10⁻³ is the threshold. The mask values obtained via the previous equation are decimated according to the number of time frames of the final output, *Tₒ.*

According to one embodiment, an implementation of the ER framework follows. Experiments were conducted using IEMOCAP [C. Busso, M. Bulut and C. C. Lee, A. Kazemzadeh, E. Mower, S. Kim, J. N. Chang, S. Lee, and S. S. Narayanan, "IEMOCAP: Interactive emotional dyadic motion capture database," Language resources and evaluation, vol .42, pp. 335-359, Dec. 2008] and EmoDB [F. Burkhardt, A. Paeschke, M. Folfes, W. F. Sendlmeier and B. Weiss, "A satabase of German emotional speech," in Proc. Interspeech, vol. 5, pp. 1517-1520, Sep. 2005] datasets, where the sampling rate of all signals was 16 kHz. Regarding IEMOCAP, the dataset includes a total of 12 hours of audio-visual data divided into 5 sessions with 10 subjects, *i.e.,* one male and one female speech recording in each session under scripted and improvised scenarios. The scripted part is performed for predetermined emotions, while the improvised part is closer to a natural conversation. The dataset contains various categorical emotion labels. Among them, in order to compare the results of the proposed method to those of the previous studies, two classes of excited and happy were combined into one class, and used a total of 4 emotion states, *i.e.,* neutral, angry, sad and happy. Evaluations were performed using the 5-fold cross-validation method for improvised scenario and all scenario *(i.e.,* improvised and scripted), separately. Regarding EmoDB, the dataset is in German-language and includes 535 emotional utterances recorded by 5 male and 5 female speakers regarding 7 emotion categories, *i.e.,* neutral, angry, sad, happy, fearful, boredom, disgust. Similar to the experiments with IEMOCAP database, 5-fold cross-validation was considered.

First, in the exemplary implementation, pre-emphasis is applied to the time-domain speech signal, and the maximum length of the utterances are set to 8s-that is, the signal was zero-padded with random sizes before and after the given utterances which were shorter than the maximum length, while randomly cropped the given utterances which were longer than the maximum length. The Hamming window of 512 samples with 50% overlap and 512-point fast Fourier transform were then applied to the pre-processed signal to obtain the short-time Fourier transform (STFT) coefficients. According to the network configuration illustrated in FIG. 7, the proposed architecture predicts the emotion from a given speech utterance every 0.25s. Subsequently, the LMFB coefficients with the feature size of 64 were computed. Finally, frame-wise zero-mean normalization was applied to the extracted LMFB feature. The model parameters were updated via error back-propagation and the adaptive moment estimation (Adam) optimizer for 200 epochs, with the batch size of 64. The regularization coefficient of λ = 0.001 in Equation (2). The initial learning rate was set to 10⁻⁴, which decreased by 15% for every 20 epochs after 60 epochs of training. Regarding the objective measures for performance evaluation and comparison, the unweighted accuracy (UA) and weighted accuracy (WA) were computed. The UA indicates the overall accuracy across all utterances of the testing set, while the WA indicates the average accuracy across all classes. In addition, precision, recall, F1-score as well as the confusion matrix was measured for additional performance measurement.

Thus, there was provided a conditional transformer-based U-net architecture for SER and, more generally, ER. The proposed architecture consisted of CTR-based encoder, feature decoder and emotion decoder. The emotion is predicted by the emotion decoder based on the compressed bottleneck feature obtained from the encoder and the trainable emotion query. To better extract the features for the emotion decoder, the feature decoder is used, which essentially reconstructs the feature from the bottleneck feature, using a refined embedding mechanism of the predicted emotion states. The channel attention enabled a better real-time processing of the emotion recognition.

According to embodiments, the ER set forth above is incorporated into and installed into an electronic controller of a vehicle (referred to as an onboard vehicle controller). The vehicle may be a passenger vehicle, such as a car, truck, sports utility vehicle (SUV), motorcycle, all tertian vehicle (ATV), boat, ship, other marine vehicle, airplane, unmanned aerial vehicle (UAV), other aerial vehicle, or other vehicle driven or operated by a person. The vehicle may include one or more sensors, such as digital cameras and/or microphones for capturing image and audio data respectively. In embodiments, the visual ER (VER) is performed by using image embeddings instead of audio embeddings as input into the encoder. Further, in some embodiments, audiovisual (AVER) may be performed by using embeddings derived from audio and image data, as input into the encoder.

Although the forgoing description described embodiments in the context of speech emotion recognition, it will be appreciated that other embodiments may be used for other emotion recognition, such as image-based emotion recognition whereby input features from images of a video, for example, are used.

According to embodiments including the presently-illustrated embodiment, any one or more embodiments of the systems presented above system includes at least one processor and memory storing computer instructions that, when executed, cause the system's associated functionality to be performed. Also, according to embodiments, any one or more embodiments of the methods described herein is performed by the system or a system having at least one processor and memory storing computer instructions that, when executed, cause the system's associated functionality to be performed.

It is to be understood that the foregoing description is of one or more embodiments of the invention. The invention is not limited to the particular embodiment(s) disclosed herein, but rather is defined solely by the claims below. Furthermore, the statements contained in the foregoing description relate to the disclosed embodiment(s) and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation. In addition, the term "and/or" is to be construed as an inclusive OR. Therefore, for example, the phrase "A, B, and/or C" is to be interpreted as covering all of the following: "A"; "B"; "C"; "A and B"; "A and C"; "B and C"; and "A, B, and C." Furthermore, in spite of this express clarification of "and/or", the use of "or" (without the "and/" prepend thereto) herein does not necessarily denote an exclusive OR and, as is hereby provided, is to be interpreted in the same manner as the term "and/or" unless stated other (e.g., through the use of "either" in combination with the "or") this would result in teachings that are technically defunct or otherwise infeasible.

## Claims

1. An emotion recognition (ER) system, wherein the ER system includes at least one processor and memory having computer instructions that, when executed by the at least one processor, cause the system to operate an ER network, wherein the ER network comprises:
an encoder configured to generate an embedded feature includes self-attention followed by a convolutional layer; and
a decoder configured to generate a predicted emotion output based on the embedded feature, the decoder is configured to perform cross-attention in which the embedded feature generated by the encoder is used as input along with an emotion query embedding generated based on an emotion query.

2. The ER system of claim 1, wherein the self-attention of the encoder employs a convolutional layer that operates on positionally-encoded input of the self-attention of the encoder.

3. The ER system of claim 1 or 2, wherein the emotion query is an emotion query, and wherein the emotion query embedding is generated through self-attention performed using the emotion query and the embedded feature generated by the encoder.

4. The ER system of any one of the preceding claims, wherein the decoder includes a convolutional feed-forward network that operates on the output of the cross-attention.

5. The ER system of any one of the preceding claims, wherein the ER system is a speech ER system that is configured to generate a predicted emotion given input speech, or
wherein the ER system is a video ER system that is configured to generate a predicted emotion for input image data, or
wherein the ER system is an audiovisual speech ER system that is configured to generate a predicted emotion based on input audio data and input image data.

6. The ER system of any one of the preceding claims, wherein the encoder includes a plurality of encoder blocks, and wherein each encoder block of the plurality of encoder blocks includes convolutional self-attention as the self-attention for the encoder.

7. An onboard vehicle controller for a vehicle, comprising the ER system of any one of the preceding claims, wherein the ER system is configured to receive sensor data of the vehicle and to process the sensor data using the ER network in order to determine a predicted emotion based on the predicted emotion output of the ER network, wherein, in particular, channel-wise attention is performed by the ER network.

8. A vehicle having the onboard vehicle controller of claim 7.

9. A machine learning (ML) system, wherein the ML system includes at least one processor and memory having computer instructions that, when executed by the at least one processor, cause the system to operate a ML network, wherein the ML network comprises:
an encoder having at least one convolutional self-attention encoder block comprised of convolutional self-attention followed by a convolutional feed-forward network; and
a decoder having at least one convolutional cross-attention decoder block comprised of convolution cross-attention followed by a convolutional feed-forward network.

10. The ML system of claim 9, wherein the convolutional self-attention includes performing a convolution separately over an initial query, key, and value.

11. The ML system of claim 9 or 10, wherein the convolutional cross-attention includes performing a convolution separately over an initial query, key, and value; and/or wherein the convolutional cross-attention includes using a learnable decoder query embedding as query in the convolutional cross-attention.

12. The ML network of any one of the preceding claims 9 to 11, wherein the ML network is trained using a training process that includes reconstructing an encoder input feature using a feature decoder that is arranged in an autoencoder fashion with the encoder.

13. The ML network of claim 12, wherein the encoder and the feature decoder are configured in a U-net configuration during the training process.

14. The ML network of claim 13, wherein the feature decoder includes convolution cross-attention followed by a convolutional feed-forward network, wherein, in particular, the convolution cross-attention of the feature decoder generates an output based on an output of the encoder.

15. An emotion recognition (ER) network comprised of the ML network of any one of the preceding claims 9 to 14, wherein the ER network is configured to determine a predicted emotion output based on speech and/or image data.
